(19) Europäisches Patentamt
European Patent Office
Office européen des brevets

(11) **EP 3 229 008 A1**

(12) **EUROPEAN PATENT APPLICATION**

(43) Date of publication:
**11.10.2017 Bulletin 2017/41**

(51) Int Cl.:
**G01N 15/00** (2006.01)     **G01N 15/02** (2006.01)
**G01N 15/06** (2006.01)

(21) Application number: **16185449.2**

(22) Date of filing: **24.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.06.2016 GB 201610261**

(71) Applicant: **Malvern Instruments Limited**
**Malvern, Worcestershire WR14 1XZ (GB)**

(72) Inventors:
• **LATUNDE-DADA, Seyi**
**Malvern, Worcestershire WR14 1XZ (GB)**
• **BARKER, Oksana**
**Malvern, Worcestershire WR14 1XZ (GB)**
• **HAMILTON, Douglas**
**Malvern, Worcestershire WR14 1XZ (GB)**
• **BARKER, David**
**Malvern, Worcestershire WR14 1XZ (GB)**
• **TRIKERIOTIS, Markos**
**Malvern, Worcestershire WR14 1XZ (GB)**

(74) Representative: **Lawrence, John**
**Barker Brettell LLP**
**100 Hagley Road**
**Edgbaston**
**Birmingham B16 8QQ (GB)**

(54) **TAYLOR DISPERSION ANALYSIS**

(57)     A method of determining a size distribution of a sample from a measured Taylorgram is disclosed. The method comprises: injecting the sample into a flow of eluent within a capillary at an injection location; flowing the sample through a length of the capillary from the injection location to a detection location; detecting a Taylorgram (100) using a sensor at the detection location as the sample flows past the detection location; analysing the detected Taylorgram (210) by: determining an initial estimate for mean particle size and polydispersity index by fitting a function to the Taylorgram (211); simulating a plurality of Taylorgrams using the estimated mean size, each of the plurality of simulated Taylorgrams having a different selected polydispersity index (212); obtaining a sample of noise from the detected Taylorgram, and adding noise derived from the sample of noise to each of the simulated Taylorgrams (213); determining an estimated polydispersity for each of the simulated Taylorgrams by fitting a function to each simulated Taylorgram (214); determining a relationship between the estimated polydispersities and the selected polydispersities (215); using the relationship to determine a final estimate for polydispersity index from the initial estimate for polydispersity index (216).

Figure 14

**Description**

This invention concerns a method for determining the size distribution of a mixture of particles based on Taylor dispersion analysis (TDA).

Data obtained from a Taylor dispersion analysis experiment may be referred to as a Taylorgram. Traditional numerical schema for processing Taylorgrams typically determine a single average particle size for a polydisperse sample. A method for determining the size distribution of a polydisperse sample from the data obtained from a Taylor dispersion analysis is desirable.

US2015/0192507A1 discloses how to analyse a Taylorgram by seeking an amplitude distribution that allows the Taylorgram to be broken down into a sum of Gaussian functions with the aid of a constrained regularization algorithm. This consists of the minimisation of a cost function including at least one constraint term that matches the solution to the Taylorgram. The minimization is carried out on an interval of interest of the values of a parameter that is characteristic of the Gaussian amplitude function.

According to a first aspect of the invention, there is provided a method of determining a size distribution of a sample comprising a mixture of particles from a measured Taylorgram, comprising:

injecting the sample into a flow of eluent within a capillary at an injection location;
flowing the sample through a length of the capillary from the injection location to a detection location;
detecting a Taylorgram using a sensor at the detection location as the sample flows past the detection location;
analysing the Taylorgram by searching for a fit to the Taylorgram using a constrained regularisation algorithm comprising minimising a cost function that includes a contribution from a regularization parameter;

wherein the fit comprises the sum of a plurality of expressions, each expression being a time-dependent Gaussian corresponding with a component of the mixture of particles.

The time dependent Gaussian may be of the form:

$$F = \sqrt{\frac{t_0}{t}}\, e^{-\left[\frac{(t-t_0)^2}{2\sigma^2}\frac{t_0}{t}\right]}$$

where $t$ is the time of the measurement, $t_0$ is approximately the centre of the distribution and $\sigma$ is approximately the standard deviation from which the diffusion coefficient and hence hydrodynamic radius of the sample may be determined.

According to a second aspect of the invention, there is provided a method of determining a size distribution of a sample comprising a mixture of particles from a measured Taylorgram, comprising:

injecting the sample into a flow of eluent within a capillary at an injection location;
flowing the sample through a length of the capillary from the injection location to a detection location;
detecting a Taylorgram using a sensor at the detection location as the sample flows past the detection location;
analysing the Taylorgram by searching for a fit to the Taylorgram using a constrained regularisation algorithm comprising minimising a cost function that includes a contribution from a regularization parameter;

wherein the fit comprises the sum of a plurality of expressions, each expression being an error function corresponding with a component of the mixture of particles.

The time dependent expression containing an error function may be of the form:

$$F = \left[\frac{1}{2} + \frac{1}{2}\,erf\left(\frac{t-t_0}{\sqrt{2}\sigma}\sqrt{\frac{t_0}{t}}\right)\right]$$

where $t$ is the time of the measurement, $t_0$ is approximately the centre of the distribution and $\sigma$ is approximately the standard deviation from which the diffusion coefficient and hence hydrodynamic radius of the sample may be determined.

According to a third aspect of the invention, there is provided a method of determining a size distribution of a sample comprising a mixture of particles from a measured Taylorgram, comprising:

injecting the sample into a flow of eluent within a capillary at an injection location;
flowing the sample through a length of the capillary from the injection location to a detection location;
detecting a Taylorgram using a sensor at the detection location as the sample flows past the detection location;
analysing the Taylorgram by:

determining an estimated residence time for each component of the mixture of particles from the Taylorgram by fitting a function to the Taylorgram;

searching for a fit to the Taylorgram using a constrained regularisation algorithm comprising minimising a cost function that includes a contribution from a regularization parameter;

wherein the fit comprises the sum of a plurality of expressions, each expression being a function corresponding with a component of the mixture of particles and comprising the respective estimated residence time for that component.

Each respective estimated residence time may have a different value.

According to a fourth aspect of the invention, there is provided a method of determining a size distribution of a sample from a measured Taylorgram, comprising:

injecting the sample into a flow of eluent within a capillary at an injection location;

flowing the sample through a length of the capillary from the injection location to a detection location;

detecting a Taylorgram using a sensor at the detection location as the sample flows past the detection location;

analysing the detected Taylorgram by:

determining an initial estimate for mean particle size and polydispersity index by fitting a function to the Taylorgram;

simulating a plurality of Taylorgrams using the estimated mean size, each of the plurality of simulated Taylorgrams having a different selected polydispersity index;

adding noise that is representative of noise in the detected Taylorgram to each of the simulated Taylorgrams;

determining an estimated polydispersity for each of the simulated Taylorgrams by fitting a function to each simulated Taylorgram;

determining a relationship between the estimated polydispersities and the selected polydispersities;

using the relationship to determine a final estimate for polydispersity index from the initial estimate for polydispersity index.

The method may include obtaining a sample of noise from a (or the) detected Taylorgram, and the noise that is representative may be derived from the sample of noise. For example the spectral characteristics of noise obtained under similar measurement conditions may be obtained, and noise synthesised from the spectral characteristics. Alternatively, a representative sample of noise may simply be added to the data.

Fitting a function to the Taylorgram or fitting a function to the simulated Taylorgram may comprise:

analysing the Taylorgram or simulated Taylorgram by searching for a fit to the Taylorgram or simulated Taylorgram using a constrained regularisation algorithm comprising minimising a cost function that includes a contribution from a regularization parameter;

wherein the fit comprises the sum of a plurality of expressions, each expression being a time-dependent Gaussian corresponding with a component of the mixture of particles.

The time dependent Gaussian may be of the form:

$$F = \sqrt{\frac{t_0}{t}} e^{-\left[\frac{(t-t_0)^2 t_0}{2\sigma^2 t}\right]}$$

where $t$ is the time of the measurement, $t_0$ is approximately the centre of the distribution and $\sigma$ is approximately the standard deviation from which the diffusion coefficient and hence hydrodynamic radius of the sample may be determined.

Fitting a function to the Taylorgram or fitting a function to the simulated Taylorgram may comprise:

analysing the Taylorgram or simulated Taylorgram by searching for a fit to the Taylorgram or simulated Taylorgram using a constrained regularisation algorithm comprising minimising a cost function that includes a contribution from a regularization parameter;

wherein the fit comprises the sum of a plurality of expressions, each expression being an error function corresponding with a component of the mixture of particles.

The error function may be of the form:

$$F = \left[ \frac{1}{2} + \frac{1}{2} erf \left( \frac{t-t_0}{\sqrt{2}\sigma} \sqrt{\frac{t_0}{t}} \right) \right]$$

where $t$ is the time of the measurement, $t_0$ is approximately the centre of the distribution and $\sigma$ is approximately the standard deviation from which the diffusion coefficient and hence hydrodynamic radius of the sample may be determined.

The sample may comprise a mixture of particles. Analysing the Taylorgram may comprise determining an estimated residence time for each component of the mixture of particles from the Taylorgram by fitting a function to the Taylorgram. Fitting a function to the Taylorgram or simulated Taylorgram may comprise using a constrained regularisation algorithm comprising minimising a cost function that includes a contribution from a regularization parameter, wherein the fit comprises the sum of a plurality of expressions, each expression being a function corresponding with a component of the mixture of particles and comprising the respective estimated residence time for that component.

Searching for a fit may comprise using a constrained least squares algorithm, for instance, non-negative least squares (NNLS).

Searching for a fit may comprise minimising a function of the form:

$$\|F * A - d\|^2 + \|\lambda L * A\|^2$$

where $L$ is the quadratic smoothing matrix and $\lambda$ is an arbitrary coefficient called the regularization parameter. Other regularisation penalties may also be used, which may also be modified by a regularisation parameter.

Searching for a fit may comprise determining an optimal value for the regularisation parameter.

Determining an optimal value for the regularisation parameter may comprise finding a point approximating a location of maximal curvature of an L-curve (of normalised residuals vs normalised smoothing function values).

The optimal value for the regularisation parameter may be constrained between 0.01 and 1, or may selected within this range (e.g. 0.1, 0.2 or any other value).

The algorithm used to search for the fit may be provided with constraints for mean particle size. The constraints may be user selected, or may be determined by an estimate derived from the Taylorgram. An upper constraint for mean particle size may be determined from a fit to an integral of the Taylorgram. A lower constraint for mean particle size may be determined from a fit to a differential of the Taylorgram.

According to a fifth aspect, there is provided a method of determining a size distribution of a sample by dynamic light scattering, comprising:

illuminating a sample with a light beam, the sample comprising particles suspended in a dispersant;
detecting a time history of light scattered by the particles to produce scattering data;
processing the scattering data to produce autocorrelation data;
determining an initial estimate for mean particle size and polydispersity index from the autocorrelation data;
using the initial estimate for mean particle size, simulate a number of autocorrelation functions with a range of different selected polydispersity index values;
obtaining a representative sample of scattering noise;
adding the scattering noise to the simulated autocorrelation functions to obtain noisy simulated autocorrelation functions;
performing fits to the noisy simulated autocorrelation functions, and obtaining estimates for polydispersity index for each noisy simulated autocorrelation function;
determining a relationship between the estimated polydispersities and the selected polydispersities;
using the relationship to determine a final estimate for polydispersity index from the initial estimate for polydispersity index.

According to a sixth aspect, there is provided a non-volatile machine readable medium, comprising instructions for configuring an instrument that comprises a processor to perform the method in accordance with any of the previous aspects.

According to a seventh aspect, there is provided an instrument configured to perform the method in accordance with any of the first, second, third, fourth, or fifth aspects.

Optional features of each aspect are applicable to each other aspect. Each aspect may include combine each feature of each other aspect, as appropriate.

Embodiments will now be described, purely by way of example, with reference to the accompanying drawings, in which:

Figure 1 is an L-curve of the normalised residuals vs the normalised smoothing function;

Figure 2 is a graph for determining the optimal value for the regularisation parameter, showing the normalised residuals and normalised smoothing function vs the regularisation parameter;

Figure 3 is a graph illustrating a particle distribution obtained by fitting to a Taylorgram using a regularisation parameter $\lambda=0$ (i.e. without regularisation);

Figure 4 is a graph illustrating a particle distribution obtained by fitting to the same Taylorgram data as for Figure 3, using a regularisation parameter $\lambda=1000$;

Figure 5 is a graph illustrating a particle distribution obtained by fitting to the same Taylorgram data as for Figure 3, using the optimal regularisation parameter $\lambda=0.21$;

Figure 6a is a graph showing a particle size distribution obtained by applying an NNLS method to a pulse Taylorgram obtained from a sample comprising BSA (Bovine Serum Albumin);

Figure 6b is a graph showing a particle size distribution obtained by applying an NNLS method to a pulse Taylorgram obtained from a sample comprising BSA (Bovine Serum Albumin) and caffeine;

Figure 7a is a graph showing a particle size distribution obtained by applying an NNLS method to a frontal Taylorgram obtained from a sample comprising BSA (Bovine Serum Albumin);

Figure 7b is a graph showing a particle size distribution obtained by applying an NNLS method to a frontal Taylorgram obtained from a sample comprising BSA (Bovine Serum Albumin) and caffeine;

Figure 8a is a graph showing a pair of Taylorgrams (obtained from the same measurement run, from two spaced-apart detectors) and respective fits obtained using the same residence time for each of the two components of the sample;

Figure 8b is a graph showing the particle distribution corresponding with the fits of Figure 8a;

Figure 9a is a graph showing a pair of Taylorgrams (obtained from the same measurement run, from two spaced apart detectors) and respective fits obtained using a different residence time for each of the two components of the sample;

Figure 9b is a graph showing the particle distribution corresponding with the fits of Figure 9a;

Figure 10 is a graph showing the variation of PDI with the number of size bins $n$, used in the particle size distribution;

Figure 11 is a graph showing noise in Taylorgram data for BSA,

Figure 12 is a set of graphs showing simulated Taylorgrams, in which noise has been added at levels of 10%, 1% and 0.1% of the maximum Taylorgram amplitude, along with a further graph that includes a smoothed value of the simulated noisy data;

Figure 13a is a graph showing a variation in particle size obtained from fitting parameters to simulated Taylorgrams with varying degrees of simulated noise (the simulated Taylorgrams having simulated particle size of 13.68 and PDI of 0.02);

Figure 13b is a graph showing a variation in PDI obtained from fitting parameters to the same simulated Taylorgrams used in Figure 13a;

Figure 14 is a schematic flow diagram of a method, applied to TDA, according to an embodiment;

Figure 15 is a schematic flow diagram of a method, applied to DLS, according to an embodiment; and

Figure 16 is a schematic diagram of an instrument in accordance with an embodiment.

This disclosure presents a method for the determination of the size distribution of a polydisperse sample from measured Taylorgrams. This involves the application of the Non-Negative Least Squares (NNLS) method with suitable regularization to avoid any spurious solutions.

US2015/0192507A1 shows a known method of determining size distributions from the pulse TDA method, but in US2015/0192507A1 the basic functions $f$ used are pure Gaussians.

The pure Gaussian expression used in US2015/0192507A1 is:

$$f = e^{-\left[\frac{(t-t_0)^2}{2\sigma^2}\right]}$$

whilst the time-dependent expression used is embodiments of the present disclosure is:

$$f = \sqrt{\frac{t_0}{t}}\, e^{-\left[\frac{(t-t_0)^2}{2\sigma^2}\frac{t_0}{t}\right]}$$

This difference is important because for shorter measurement times the pure Gaussian expression is a poor approximation to the full time-dependent expression which affects the quality of the fits and hence results.

In some embodiments of this disclosure a time-dependent Gaussian expression is a basis function for analysing pulse Taylorgrams. In a pulse Taylorgram a pulse of sample is injected, resulting in a substantially time-dependent Gaussian profile at the detector. In a frontal Taylorgram, a longer duration slug of sample is injected, resulting in a profile at the detector that is substantially an error function.

Also described herein is a method to predict size populations in the frontal TDA method (injection of a slug of the sample) where the basic functions comprise error functions. Such a determination cannot be made using the pure Gaussian approximation which is only applicable to the pulse TDA method.

Furthermore, for samples with two populations, it is shown that it can be advantageous to apply an initial two-component fit to determine the residence times first before applying the NNLS method. This may give a better fit to the data (for example where the residence times for different components are different, due to a large difference in particle size).

Both the schema described here and that shown in US2015/0192507A1 use estimates of the polydispersity index (PDI) which are affected by noise in the Taylorgram measurement being analysed. Another aspect of this disclosed relates to a method for determining an estimate for PDI that reduces the impact of noise.

One method for fitting a function to data is the non-negative least squares (NNLS) method. The NNLS method allows the derivation of a non-negative solution set to the following equation:

$$F * A = d$$

where $A$ is an array of the coefficients (or proportions) of arbitrary functions $f$ which make up a matrix $F$. The result of the matrix multiplication is the composite distribution $d$. Hence if $F$ is an $m \times n$ matrix (i.e. there are $n$ functions of a variable of length $m$), $A$ is an $n \times 1$ array and $d$ is an $m \times 1$ array. This may be solved for $A$ by multiplying both sides from the left by the inverse of $F$:

$$A = F^{-1} * d$$

Typically, an exact solution cannot be found so instead an optimal or approximate solution is obtained by minimizing the norm of the residuals:

$$\|F * A - d\|^2$$

with the condition that the elements of $A$ are greater than or equal to zero.

In some embodiments (e.g. for pulse Taylorgrams), the function $F$ comprises time-dependent Gaussians of the form:

$$F = \sqrt{\frac{t_0}{t}} e^{-\left[\frac{(t-t_0)^2 t_0}{2\sigma^2 \; t}\right]}$$

where $t$ *is* the time of the measurement, $t_0$ is approximately the centre of the distribution and $\sigma$ is approximately the standard deviation from which the diffusion coefficient and hence hydrodynamic radius of the sample is determined.

In other embodiments (e.g. for frontal Taylorgrams), $f$ is composed of a time-dependent error function:

$$F = \left[\frac{1}{2} + \frac{1}{2} erf\left(\frac{t-t_0}{\sqrt{2}\sigma}\sqrt{\frac{t_0}{t}}\right)\right]$$

$A$ (known as the particle size distribution) is an array of the coefficients of each time-dependent Gaussian which is gives the contribution of the function to the Taylorgram $d$, which is a function of time. Below is an example for a two-component distribution:

$$\begin{bmatrix} f(\sigma_1,t_1) & f(\sigma_2,t_1) \\ f(\sigma_1,t_2) & f(\sigma_2,t_2) \\ \vdots & \vdots \end{bmatrix} \begin{bmatrix} A_1 \\ A_2 \end{bmatrix} = \begin{bmatrix} d(t_1) \\ d(t_2) \\ \vdots \end{bmatrix}$$

Note that in each column of $F$ is the time-dependent function pertaining to each component and that it in this example embodiment it is assumed that all the functions $f$ have the same residence time, $t_0$.

Furthermore, some instruments (such as Malvern Instruments Viscosizer TD) have two detection windows and hence two Taylorgrams measured at different times. Under these circumstances, the solution for $A$ can be constrained to fit both Taylorgrams, which may reduce the risk of obtaining a spurious solution.

The presence of noise in the data $d$ often leads to erroneous peaks in the solution obtained for the particle size distribution $A$. It is unlikely that these exist in reality. To avoid 'overfitting' to noisy data, we may apply some regularization to the method. The regularization penalises the residual if the solution changes in gradient across three points, i.e. if it is 'spiky'. A square smoothing matrix is appended to the end of the scattering matrix and a vector of zeros appended to the end of the measurement vector. The problem now becomes the minimization of the function:

$$\|F * A - d\|^2 + \|\lambda L * A\|^2$$

where L is the quadratic smoothing matrix and $\lambda$ is an arbitrary coefficient called the regularization parameter.

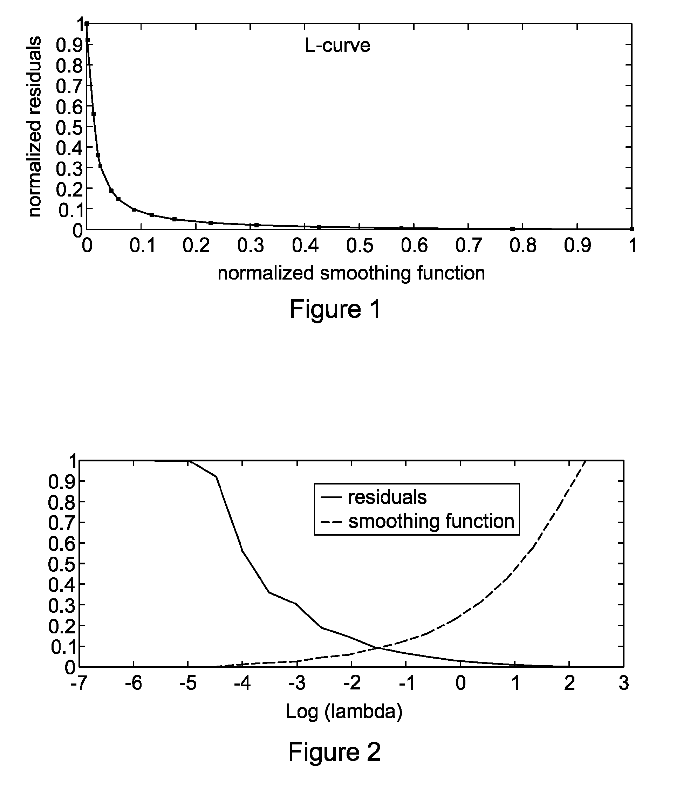

Unfortunately, because $\lambda$ is arbitrary there are a plethora of possible solutions $A$ that fit the experimental data almost equally well. Hence, the challenge is to find the most realistic solution from all these solutions by finding the most appropriate value for $\lambda$ One approach to this problem is the use of an L-curve. The L-curve is obtained by scanning a range of values for $\lambda$ and plotting the norm of the smoothing function $\|\lambda L * A\|^2$ against the norm of the residuals $\|F * A - d\|^2$. This plot typically has an L-shape, hence the name, and is shown in Figure 1.

The optimal value of $\lambda$ occurs at the point of maximum curvature of the L-curve which may be determined in a variety of ways, one of which is illustrated in Figure 2. Here the normalized residuals and smoothing function values are plotted and the value of the regularisation parameter $\lambda$ at which they coincide is chosen as the optimal value.

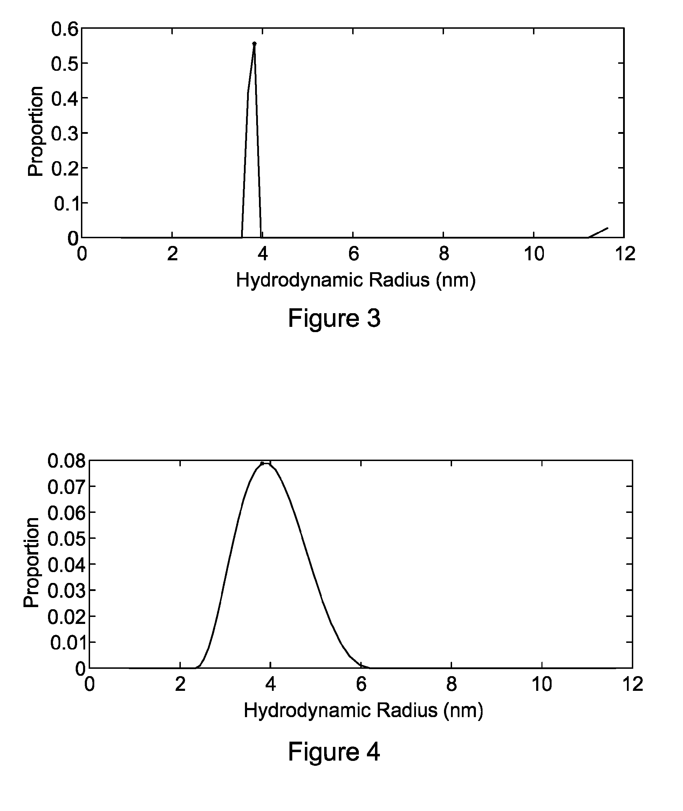

In Figures 3-5 the results obtained from fitting to a BSA (bovine serum albumin) Taylorgram for extreme values of $\lambda$ as well as for the optimum value of $\lambda=0.21$.

The number of sizes scanned for by the fitting algorithm (e.g. NNLS) is a variable that can determined by the user. The upper and lower bounds on the size range can be estimated a priori to help speed up the calculation. One way to do this is to perform fits to the integrals and differentials of the Talyorgrams, to yield Taylor-averages for the particle sizes which are biased respectively towards the smallest and largest size in the distribution. These can be used to set the upper and lower bounds of the size range scanned as follows:

$$\frac{R_h^{diff}}{2} < R_h < 2R_h^{int}$$

For mixtures of two populations, the sizes $R_h^1$ and $R_h^2$ found by using two-population fit (e.g. by NNLS) may be used to determine the size range as follows:

$$\frac{R_h^1}{2} < R_h < 2R_h^2$$

Note that these values may be converted into the corresponding values of the standard deviation σ required for the functions, in accordance with well-known formulas.

When the mean sizes of different components of a sample are sufficiently different, the residence time for each component may be slightly different. In such cases the size range is split and the matrix *F* amended accordingly with different residence times. The different residence times can be obtained by performing a fit to the Taylorgram in which the residence time is a parameter to be obtained from the fit. The use of different residence times for the different components allows for a more accurate fit to the data.

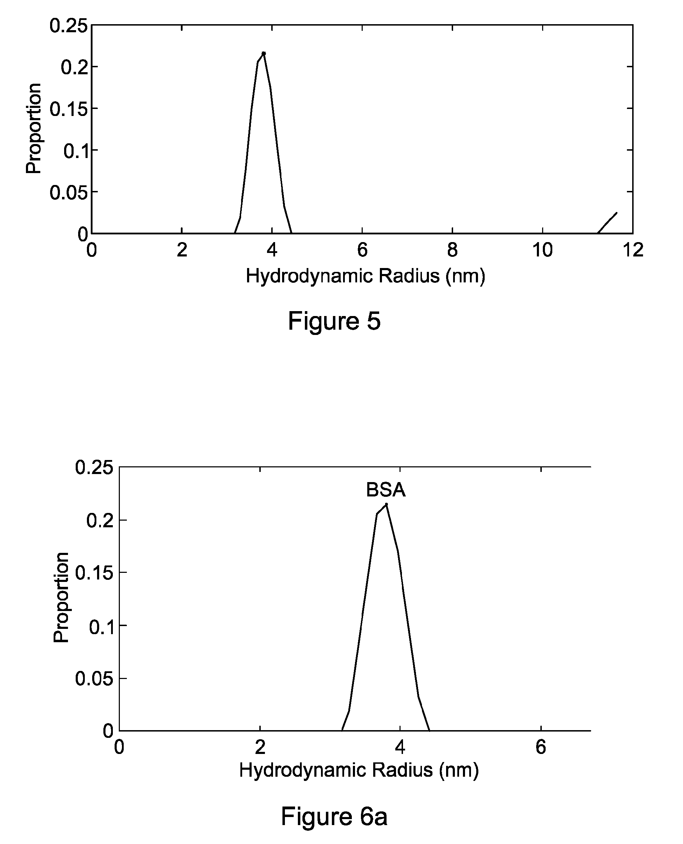

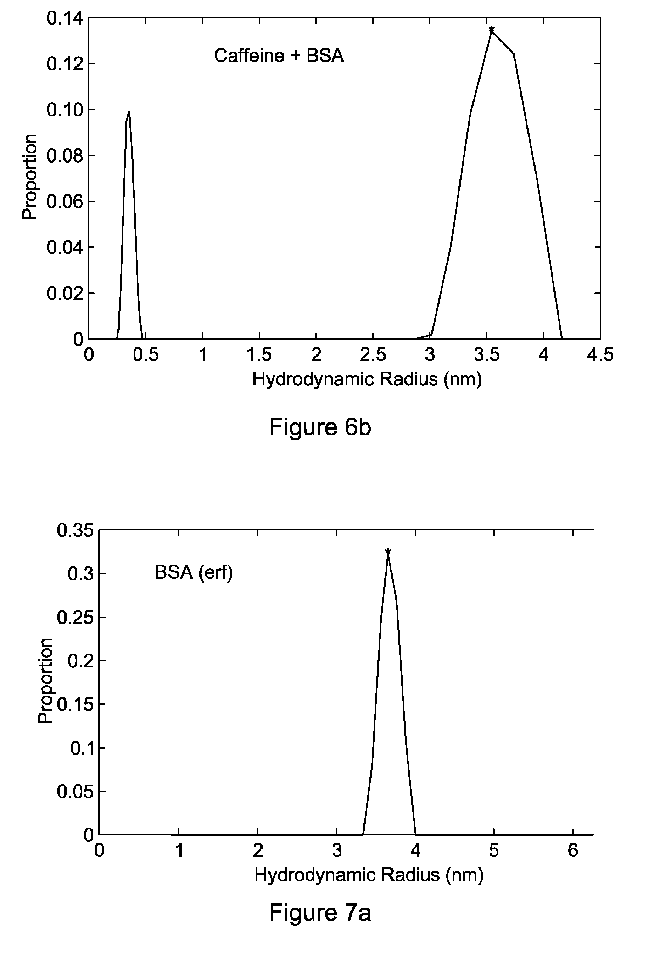

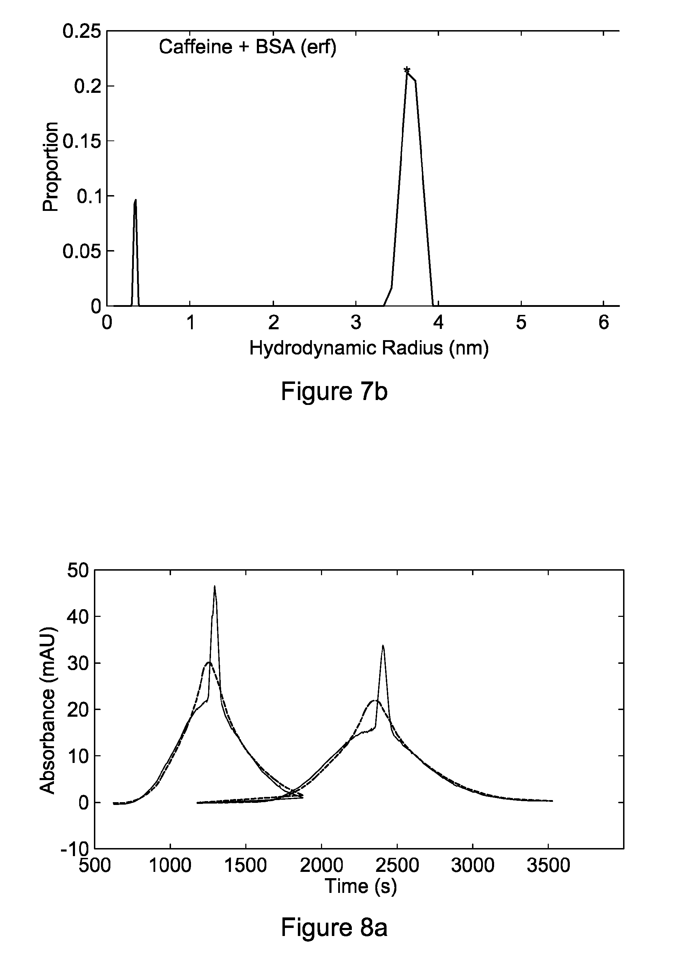

Figures 6a, 6b, 7a and 7b show the results obtained from the application of the NNLS method to BSA and a mixture of caffeine and BSA using the pulse and frontal injection methods respectively.

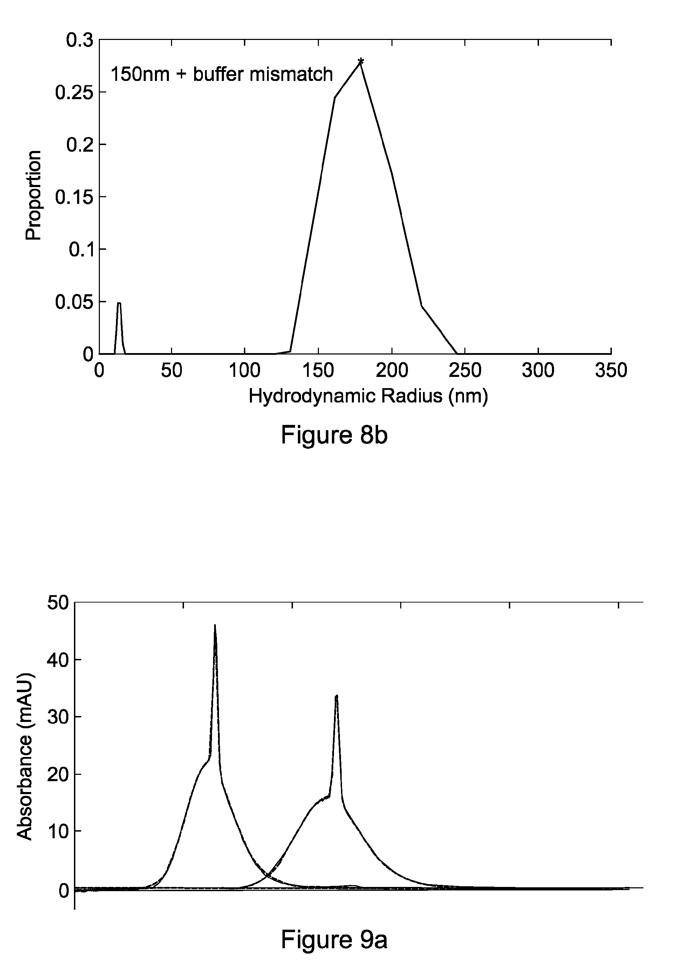

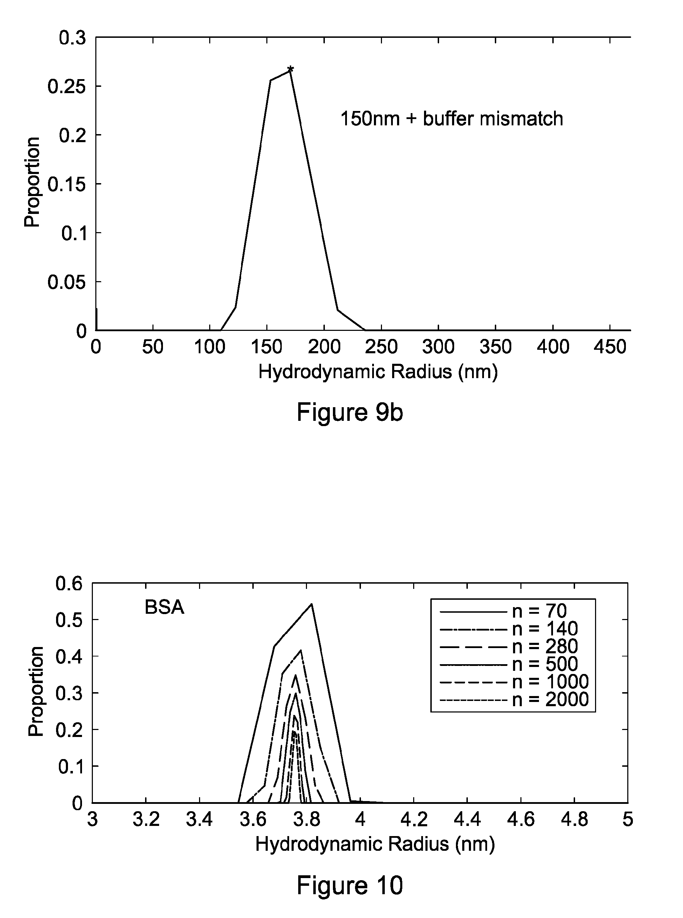

In Figures 8a and 8b are shown the results obtained for a two-population mixture with a single residence time for both. In this example, one of the populations is the buffer solution of the sample, in which the particles (of the other population) are suspended. The response of the detector to the buffer is due to a mismatch between the buffer and the eluent. This represents a case in which the residence times are different, with the result that a poor fit is obtained to the data when a single residence time is assumed, as shown in Figures 8a and 8b. However, by splitting the matrix *F* into two and using two different values for the residence times, a better fit is obtained, as shown in Figures 9a and 9b.

From the standard deviations of the preceding distributions (obtained by fitting parameters to Taylorgrams), it is theoretically possible to determine the polydispersities of the samples (PDI). However there are two issues worth considering. The first is the apparent reduction in the standard deviation of the distribution with the number of size bins, as shown in Figure 10.

In reality, the PDI of BSA is very small (~0), and hence the estimated PDI tends towards 0 as *n* approaches infinity. Hence, for a given value of *n*, the PDI is a measure of uncertainty in the solution obtained.

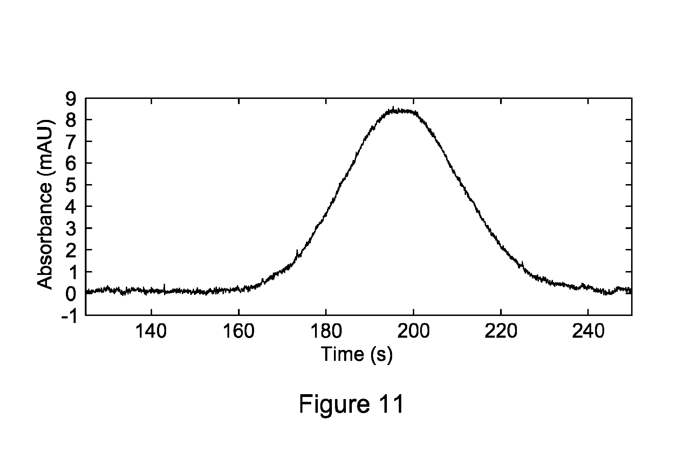

The second issue with the PDIs obtained from the fits pertains to the effect of noise in the Taylorgrams. Typical Taylorgram data is shown in Figure 11, in which noise is clearly visible.

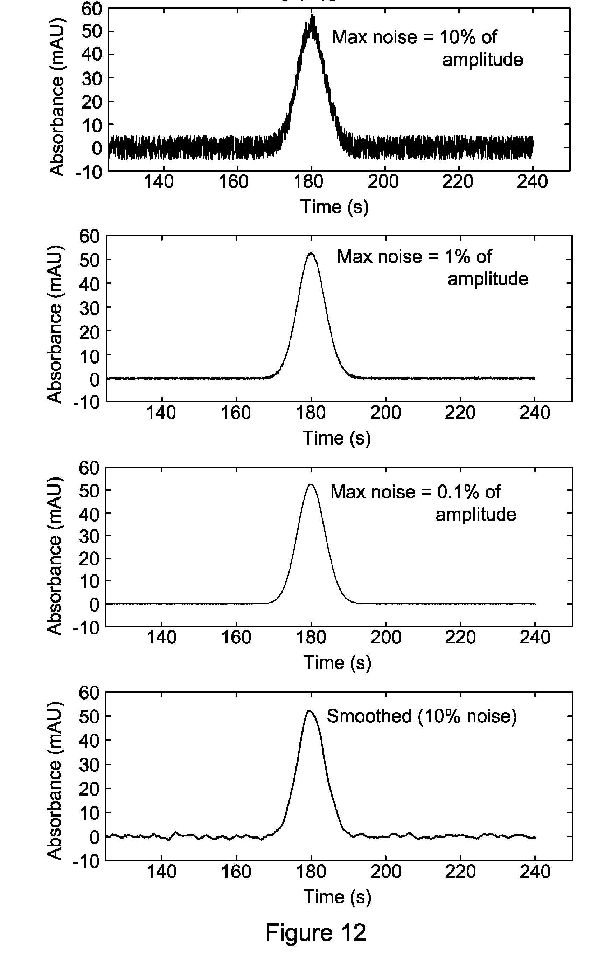

To illustrate the effect of noise, Taylorgrams with a defined PDI (of 0.02) were simulated, and varying levels of noise were added to the traces, as shown in the graphs of Figure 12. The mean size of the particles in the simulated Taylorgrams was defined as 13.68.

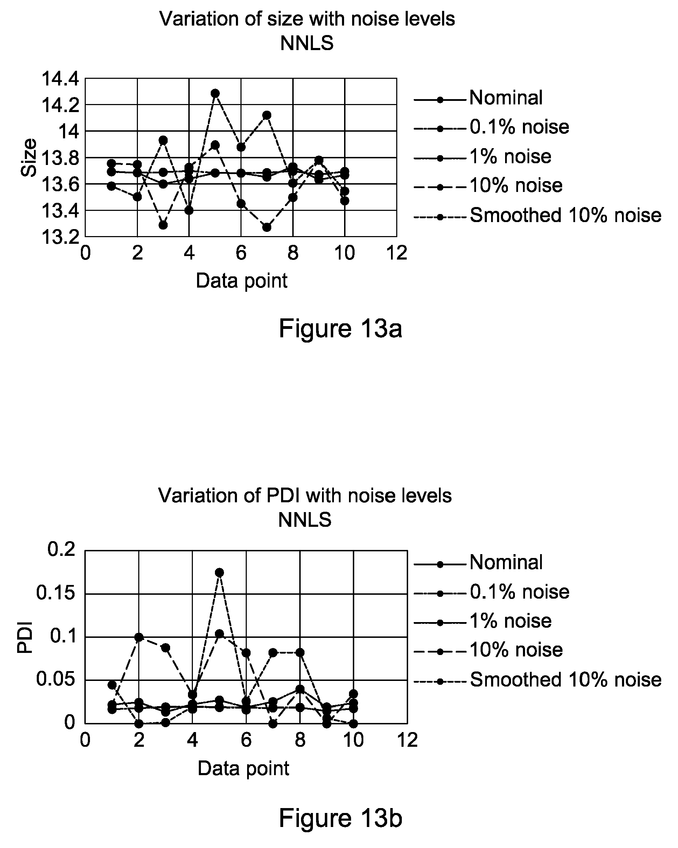

Figures 13a and 13b respectively show the variation in the size and PDI determined from performing a fit to the noisy simulated Taylorgrams. The variations are summarised in the below table, from which it is clear that smoothing the data does not ameliorate the effect of noise on the reported PDI:

**Table 1:** Summary of the results

|  | Size/nm | PDI /% |
|---|---|---|
| **0.10%** | 13.7 +/- 0.004 | 1.9 +/- 0.04 |
| **1%** | 13.7 +/- 0.03 | 2.1 +/- 0.3 |
| **10%** | 13.6 +/- 0.22 | 2.7 +/- 1.6 |
| **smoothed 10%** | 13.8 +/- 0.29 | 2.3 +/- 1.96 |

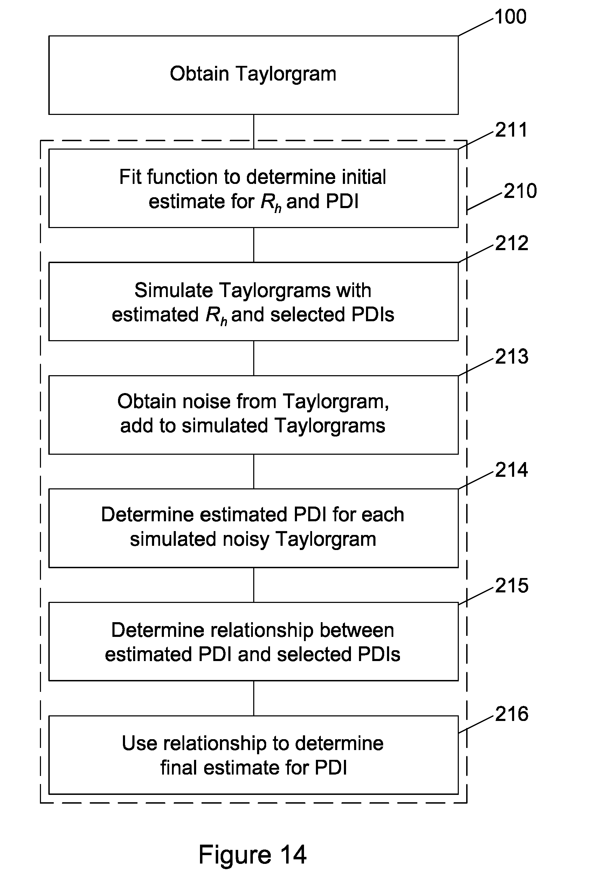

In order to overcome or ameliorate at least some of these problems, the following method, illustrated in Figure 14, may be used. The method 210 is performed on a Taylorgram (i.e. a concentration profile obtained (e.g. in a first step 100) by TDA):

1. Determine an initial estimate (211) for mean size and PDI from a fit to the data (e.g. an NNLS fit).
2. With this initial estimate for mean size, simulate a number of Taylorgrams (212) with a range of different selected PDI values.
3. Obtain a sample of the noise (213) in the data from the Taylorgram (e.g. from the residual of the fit, or from measurement data taken from the second measurement location, where the instrument has one)
4. Add the noise (213) to the simulated Taylorgrams (e.g. by synthesising noise with the same characteristics as the sampled noise).
5. Perform fits (e.g. NNLS fits) to the simulated Taylorgrams and obtain the estimated PDI (214) for each simulated Taylorgram (these will be different from selected PDIs in each simulated Taylorgram)

6. By correlating (215) the estimated PDIs to the selected PDIs, determine a final estimate (216) for the PDI of the data.

To test the above method, three Taylorgrams were simulated from lognormal distributions with a common mean of 14 and the following variances: 0.98, 1.96 and 19.6. These are the simulated Taylorgrams. A fourth trace was simulated from a lognormal distribution with the same mean and a variance of 9.8. This fourth Taylorgram serves as a proxy for real data in this example.

Next, randomly generated noise with a peak amplitude of 10% of the Taylorgram amplitude was added to these distributions. NNLS fits were then performed to the four Taylorgrams and the variances of the found solutions determined. These are shown below in comparison to the *true* (noiseless) variances:

**Table 2:** The true variances compared to the variances obtained after NNLS fits

| Taylorgram | True (noiseless) variance | NNLS variance |
|---|---|---|
| 1 (Test) | 0.98 | 46.5 |
| 2 (Test) | 1.96 | 49.1 |
| 3 (Test) | 19.6 | 84.8 |
| **4 (Data)** | **9.8** | **69** |

A final estimate for the true variance of the fourth Taylorgram (i.e. the proxy for real data) was then obtained by correlating the NNLS variances with the true variances for the three test Taylorgrams. In this example the best correlation was found to be a linear relationship between the square root of the true variance (standard deviation) and the NNLS variance. Using this correlation, the true variance of the fourth (data) Taylorgram was estimated to be 9.3 which is in good agreement with the true value of 9.8.

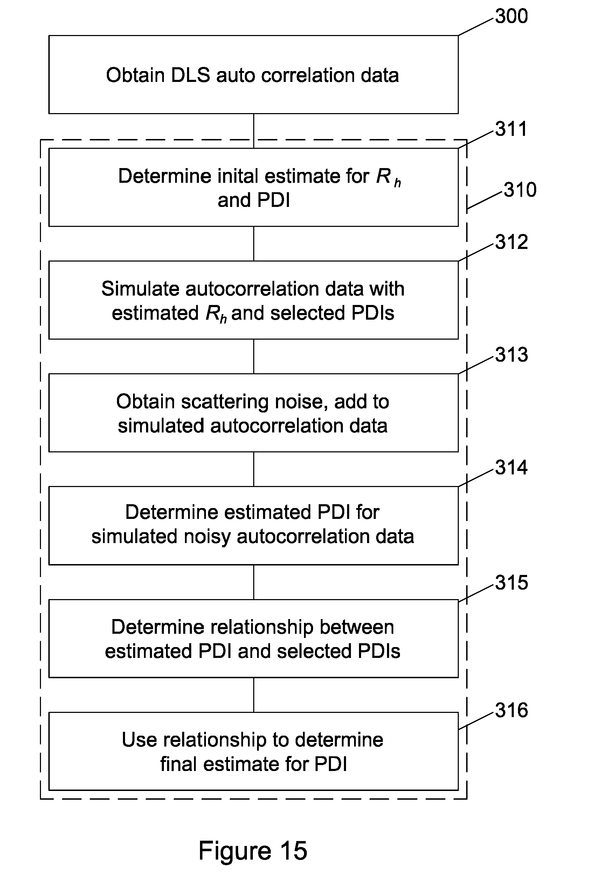

Although the invention has been described with reference to Taylor dispersion analysis, some embodiments are applicable to other measurement techniques. For example, noise in Dynamic Light Scattering measurement can be reduced using a similar method, illustrated in Figure 15. The method 310 may include a step 300 of obtaining DLS autocorrelation data (e.g. by performing a light scattering measurement on a sample, and processing the resulting data).

The method 310 may include the following steps:

1. Determine (311) an initial estimate for mean size and PDI from a fit to the DLS data or autocorrelation data (e.g. using an NNLS fit or a cumulants fit).

2. With this initial estimate for mean size, simulate a number of autocorrelation functions (312) with a range of different selected PDI values.

3. Obtain a sample of the noise (313) by either:

   a. correlating the signal from a molecular scatterer (e.g. particle dispersant, DI water, toluene, cyclohexane, etc.),
   b. correlating a signal of artificially generated random time events, or
   c. determining the noise from the residual of the fit used in step 1.
   d. correlating dark noise from the detector.

4. Add the noise to the simulated autocorrelation functions (313).

5. Perform fits (e.g. NNLS fits) to the simulated autocorrelation functions and obtain the estimated PDI (314) for each simulated autocorrelation function (these will be different to the selected PDIs in each simulated autocorrelation function).

6. By correlating (315) the estimated PDIs to the selected PDIs, determine a final estimate (316) for the PDI of the data.

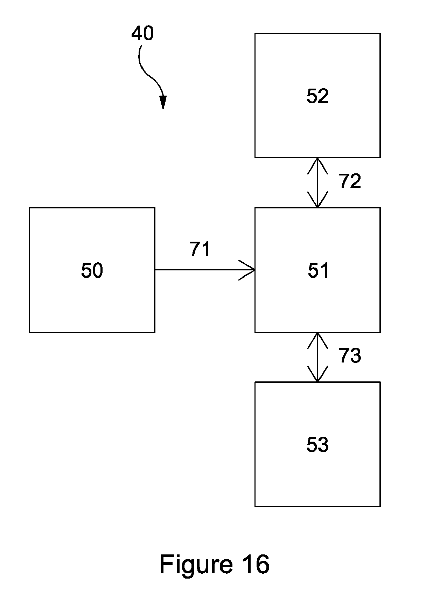

Referring to Figure 16, an apparatus 40 is shown in accordance with an embodiment. The apparatus 40 comprises an instrument 50, processor 51, output means 52 and input means 53. The instrument 50 is operable to perform a Taylor dispersion analysis on a sample, so as to produce Taylorgram data 71. The processor 51 may be configured to estimate parameters for fitting a model (e.g. Gaussian, error function) to the Taylorgram data 71, in accordance with an embodiment (for instance as described above). The processor 51 may provide an output 72 to the output means 52, which may comprise a display or printer. The output 72 may comprise model parameter estimates, and/or estimates of the properties of the sample analysed by the instrument 50, based on a model fitted to the data 71 by the processor 51. The processor 51 may be configured to use estimated model parameters (determined according to an embodiment) as a starting point for a numerical search for a best fit to the Taylorgram data 71 (for instance via regression analysis based on least squares). An input means 53 may be provided for controlling the processor 51 and/or instrument. The input means 53 may comprise a keyboard, mouse or other suitable user interface device.

The instrument 50 may comprise a capillary linking two containers . Liquid is driven (e.g. at constant pressure) from the first container to the second container. The first container contains a run (or carrier) solution so that the capillary is initially filled with the run solution. The first container is then disconnected from the capillary , and a third container is connected that contains a sample solution. The sample solution may be a pharmaceutical or biopharmaceutical species dissolved either in the run/carrier solution, or in a different medium . The different medium may differ from the run/carrier solution in having an excipient, e.g. a salt or a sugar, dissolved at a different concentration than in the run/carrier solution. This may be appropriate in formulations which are designed to stabilise active drug species.

A first and second window are spaced apart along the length of the capillary between the first and second containers. The capillary may be formed in a loop so that both the first and second windows may be imaged using a single optical assembly, for instance by arranging for them to be adjacent to one another in an area imaged by the pixel array of an area imaging detector. In other embodiments, a single window may be used, or the detector may comprise a single element, rather than a pixel array.

To inject a plug of the sample into the capillary the third container may be connected to the capillary and then disconnected after a suitable volume of the sample has been injected under pressure. The second container is connected the capillary when the third container is disconnected from the capillary. The detector captures a frame sequence comprising measures of the received light intensity at the detector as the pulse of sample solution or the flow front passes through each of the first and second windows. The detector output thereby provides data on absorbance versus time: a Taylorgram.

Although the method has been described with reference to TDA and DLS, in principle a similar approach (of simulating a number of noisy measurements to determine a true value for a measurement parameter that is affected by noise) can be applied to any measurement technique in which an output of the measurement is affected by noise.

Other variations are possible, and the scope of the invention is not intended to be limited by the illustrative examples given above, but instead determined with reference to the appended claims.

**Claims**

1.  A method of determining a size distribution of a sample from a measured Taylorgram, comprising:

    injecting the sample into a flow of eluent within a capillary at an injection location;
    flowing the sample through a length of the capillary from the injection location to a detection location;
    detecting a Taylorgram using a sensor at the detection location as the sample flows past the detection location;
    analysing the detected Taylorgram by:

    determining an initial estimate for mean particle size and polydispersity index by fitting a function to the Taylorgram;
    simulating a plurality of Taylorgrams using the estimated mean size, each of the plurality of simulated Taylorgrams having a different selected polydispersity index;
    adding noise that is representative of noise in the detected Taylorgram to each of the simulated Taylorgrams;
    determining an estimated polydispersity for each of the simulated Taylorgrams by fitting a function to each simulated Taylorgram;
    determining a relationship between the estimated polydispersities and the selected polydispersities;
    using the relationship to determine a final estimate for polydispersity index from the initial estimate for polydispersity index.

2.  The method of claim 1, wherein fitting a function to the Taylorgram or fitting a function to the simulated Taylorgram comprises:

    analysing the Taylorgram or simulated Taylorgram by searching for a fit to the Taylorgram or simulated Taylorgram using a constrained regularisation algorithm comprising minimising a cost function that includes a contribution from a regularization parameter;

    wherein the fit comprises the sum of a plurality of expressions, each expression being a time-dependent Gaussian corresponding with a component of the mixture of particles.

3.  The method of claim 2, wherein the time dependant Gaussian is of the form:

$$F = \sqrt{\frac{t_0}{t}} e^{-\left[\frac{(t-t_0)^2 t_0}{2\sigma^2 \, t}\right]}$$

where $t$ is the time of the measurement, $t_0$ is approximately the centre of the distribution and $\sigma$ is approximately the standard deviation from which the diffusion coefficient and hence hydrodynamic radius of the sample may be determined.

4. The method of claim 1, wherein fitting a function to the Taylorgram or fitting a function to the simulated Taylorgram comprises: analysing the Taylorgram or simulated Taylorgram by searching for a fit to the Taylorgram or simulated Taylorgram using a constrained regularisation algorithm comprising minimising a cost function that includes a contribution from a regularization parameter;
wherein the fit comprises the sum of a plurality of expressions, each expression being an error function corresponding with a component of the mixture of particles.

5. The method of claim 4, wherein the error function is of the form:

$$F = \left[\frac{1}{2} + \frac{1}{2} erf\left(\frac{t-t_0}{\sqrt{2}\sigma} \sqrt{\frac{t_0}{t}}\right)\right]$$

where $t$ is the time of the measurement, $t_0$ is approximately the centre of the distribution and $\sigma$ is approximately the standard deviation from which the diffusion coefficient and hence hydrodynamic radius of the sample may be determined.

6. The method of any preceding claim, wherein:

the sample comprises a mixture of particles;
analysing the Taylorgram comprises determining an estimated residence time for each component of the mixture of particles from the Taylorgram by fitting a function to the Taylorgram; and
fitting a function to the Taylorgram or simulated Taylorgram comprises using a constrained regularisation algorithm comprising minimising a cost function that includes a contribution from a regularization parameter, wherein the fit comprises the sum of a plurality of expressions, each expression being a function corresponding with a component of the mixture of particles and comprising the respective estimated residence time for that component.

7. The method of any of claims 1 to 5, wherein the sample comprises a mixture of particles, and the method comprises determining an estimated residence time for each component of the mixture of particles from the Taylorgram by fitting a function to the Taylorgram.

8. The method of any preceding claim wherein searching for a fit comprises using a constrained least squares algorithm, for instance, non-negative least squares (NNLS).

9. The method of claim 8, wherein searching for a fit comprises minimising a function of the form:

$$\|F * A - d\|^2 + \|\lambda L * A\|^2$$

where $L$ is the quadratic smoothing matrix and $\lambda$ is an arbitrary coefficient called the regularization parameter.

10. The method of claim 9, comprising determining an optimal value for the regularisation parameter by finding a point approximating a location of maximal curvature of an L-curve.

11. The method of claim 9 or 10, wherein the optimal value for the regularisation parameter is selected from the range of 0.01 to 1.

12. The method of any preceding claim, wherein an algorithm used to search for a fit to a Taylorgram is provided with constraints for mean particle size, wherein an upper constraint for mean particle size is determined from a fit to an integral of the Taylorgram and/or a lower constraint for mean particle size is determined from a fit to a differential of the Taylorgram.

13. A method of determining a size distribution of a sample by dynamic light scattering, comprising:

   illuminating a sample with a light beam, the sample comprising particles suspended in a dispersant;
   detecting a time history of light scattered by the particles to produce scattering data;
   processing the scattering data to produce autocorrelation data;
   determining an initial estimate for mean particle size and polydispersity index from the autocorrelation data;
   using the initial estimate for mean particle size, simulate a number of autocorrelation functions with a range of different selected polydispersity index values;
   obtaining a representative sample of scattering noise;
   adding the scattering noise to the simulated autocorrelation functions to obtain noisy simulated autocorrelation functions;
   performing fits to the noisy simulated autocorrelation functions, and obtaining estimates for polydispersity index for each noisy simulated autocorrelation function;
   determining a relationship between the estimated polydispersities and the selected polydispersities;
   using the relationship to determine a final estimate for polydispersity index from the initial estimate for polydispersity index.

14. A non-volatile machine readable medium, comprising instructions for configuring an instrument that comprises a processor to perform the method in accordance with any preceding claim.

15. An instrument configured to perform the method in accordance with any of claims 1 to 13.

Figure 1

Figure 2

Figure 3

Figure 4

Figure 5

Figure 6a

Figure 6b

Figure 7a

Figure 7b

Figure 8a

Figure 8b

Figure 9a

Figure 9b

Figure 10

Figure 11

Figure 12

Variation of size with noise levels
NNLS

Figure 13a

Variation of PDI with noise levels
NNLS

Figure 13b

100

Obtain Taylorgram

211

210

Fit function to determine initial
estimate for $R_h$ and PDI

212

Simulate Taylorgrams with
estimated $R_h$ and selected PDIs

213

Obtain noise from Taylorgram,
add to simulated Taylorgrams

214

Determine estimated PDI for each
simulated noisy Taylorgram

215

Determine relationship between
estimated PDI and selected PDIs

216

Use relationship to determine
final estimate for PDI

Figure 14

```
                                                              ⌐300
  ┌─────────────────────────────────────────────────┐
  │                                                 │
  │         Obtain DLS auto correlation data        │
  │                                                 │
  └─────────────────────────────────────────────────┘
                                                              ⌐311
  ┌ ─ ─ ─ ─ ─ ─ ─ ─ ─ ─ ─ ─ ─ ─ ─ ─ ─ ─ ─ ─ ─ ─ ─ ┐
  │ ┌─────────────────────────────────────────────┐ │
  │ │                                             │ │        ⌐310
  │ │      Determine inital estimate for R h       │ │
  │ │               and PDI                       │ │
  │ └─────────────────────────────────────────────┘ │
  │                                                 │        ⌐312
  │ ┌─────────────────────────────────────────────┐ │
  │ │                                             │ │
  │ │      Simulate autocorrelation data with      │ │
  │ │      estimated R h and selected PDIs        │ │
  │ └─────────────────────────────────────────────┘ │
  │                                                 │        ⌐313
  │ ┌─────────────────────────────────────────────┐ │
  │ │                                             │ │
  │ │         Obtain scattering noise, add to     │ │
  │ │         simulated autocorrelation data      │ │
  │ └─────────────────────────────────────────────┘ │
  │                                                 │        ⌐314
  │ ┌─────────────────────────────────────────────┐ │
  │ │                                             │ │
  │ │         Determine estimated PDI for         │ │
  │ │      simulated noisy autocorrelation data    │ │
  │ └─────────────────────────────────────────────┘ │
  │                                                 │        ⌐315
  │ ┌─────────────────────────────────────────────┐ │
  │ │                                             │ │
  │ │      Determine relationship between         │ │
  │ │      estimated PDI and selected PDIs         │ │
  │ └─────────────────────────────────────────────┘ │
  │                                                 │        ⌐316
  │ ┌─────────────────────────────────────────────┐ │
  │ │                                             │ │
  │ │      Use relationship to determine          │ │
  │ │           final estimate for PDI            │ │
  │ └─────────────────────────────────────────────┘ │
  └ ─ ─ ─ ─ ─ ─ ─ ─ ─ ─ ─ ─ ─ ─ ─ ─ ─ ─ ─ ─ ─ ─ ─ ┘
```

Figure 15

40

52

72

50 71 51

73

53

Figure 16

| | Europäisches Patentamt European Patent Office Office européen des brevets | **EUROPEAN SEARCH REPORT** | Application Number EP 16 18 5449 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUCA CIPELLETTI ET AL: "Measuring Arbitrary Diffusion Coefficient Distributions of Nano-Objects by Taylor Dispersion Analysis", ANALYTICAL CHEMISTRY, vol. 87, no. 16, 18 August 2015 (2015-08-18), pages 8489-8496, XP055272234, US ISSN: 0003-2700, DOI: 10.1021/acs.analchem.5b02053 | 1,2,4,5, 8-12,14, 15 | INV. G01N15/00 G01N15/02 G01N15/06 |
| Y | * the whole document * | 3,6,7 | |
| X | & Luca Cipelletti ET AL: "Supporting Information to Measuring arbitrary diffusion coefficient distributions of nano-objects by Taylor dispersion analysis", , 5 August 2015 (2015-08-05), XP055358499, Retrieved from the Internet: URL:http://pubs.acs.org/doi/suppl/10.1021/ acs.analchem.5b02053 [retrieved on 2017-03-24] * the whole document * | 1,2,4,5, 8-12,14, 15 | |
| | ----- | | TECHNICAL FIELDS SEARCHED (IPC) |
| Y | SEYI LATUNDE-DADA ET AL: "Application of the Exact Dispersion Solution to the Analysis of Solutes beyond the Limits of Taylor Dispersion", ANALYTICAL CHEMISTRY, vol. 87, no. 15, 4 August 2015 (2015-08-04), pages 8021-8025, XP055220492, US ISSN: 0003-2700, DOI: 10.1021/acs.analchem.5b02159 * abstract; figures 1-5 * * page 8022 - page 8025 * | 3,6,7 | G01N |
| | ----- | | |
| | -/-- | | |

~~The present search report has been drawn up for all claims~~

| Place of search | Date of completion of the search | Examiner |
|---|---|---|
| The Hague | 24 March 2017 | Zarowna-Dabrowska, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

1

Europäisches
Patentamt

European
Patent Office

Office européen
des brevets

# EUROPEAN SEARCH REPORT

Application Number

EP 16 18 5449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2015/192507 A1 (COTTET HERVÉ [FR] ET AL) 9 July 2015 (2015-07-09)<br>* abstract; figures 1-5 *<br>* paragraphs [0041] - [0044], [0056] - [0058], [0100] - [0101] - paragraphs [0116] - [0121], [0133], [0141], [0216], [0230] - [0233], [0242] - [0243] * | 1,2,14, 15 | |

-----

TECHNICAL FIELDS
SEARCHED      (IPC)

~~The present search report has been drawn up for all claims~~

| Place of search | Date of completion of the search | Examiner |
|---|---|---|
| The Hague | 24 March 2017 | Zarowna-Dabrowska, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**Application Number**

EP 16 18 5449

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-12, 14, 15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the
requirements of unity of invention and relates to several inventions or groups of inventions, namely:

1. claims: 1-12, 14, 15

   Method of determining size distribution of a sample from a
   measured function with a simulated function and added noise
   using measured Taylorgram to analyse a sample flowing into a
   capillary with simulated Taylorgrams. Claims 2-12 depend on
   claim 1. Claim 14 relates to a non-volatile machine readable
   medium comprising instructions to perform the method in
   accordance with any of the preceding claims. Claim 15
   relates to an instrument configured to perform the method in
   accordance with any of the preceding claims.
   ---

2. claim: 13

   Method of determining size distribution of a sample from a
   measured function with a simulated function and added noise
   using dynamic light scattering to analyse a sample suspended
   in a dispersant with simulated autocorrelation functions.
   ---

## ANNEX TO THE EUROPEAN SEARCH REPORT
## ON EUROPEAN PATENT APPLICATION NO.

EP 16 18 5449

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2017

| Patent document cited in search report | Publication date | Patent family member(s) | Publication date |
|---|---|---|---|
| US 2015192507 A1 | 09-07-2015 | EP 2864756 A1<br>FR 2992423 A1<br>JP 2015521743 A<br>US 2015192507 A1<br>WO 2014001409 A1 | 29-04-2015<br>27-12-2013<br>30-07-2015<br>09-07-2015<br>03-01-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150192507 A1